# EUROPEAN PATENT APPLICATION

(11) **EP 1 988 500 A1**
(43) Date of publication of application: **05.11.2008**
(21) Application number: 08250918.3
(22) Date of filing: 17.03.2008
(51) Int. Cl.: G06Q 30/00, G06F 15/02

(54) **Provision of wireless offers to CE device using non-telephony wireless transmission**

(30) Priority: 03.05.2007 US 927658 P; 10.09.2007 US 852498
(71) Applicant: Sony Corporation, Tokyo 108-0075 (JP); Sony Electronics, Inc., Park Ridge, NJ 07656 (US)
(72) Inventor: Smith, Tim William, Carlsbad, CA 92011 (US)
(74) Representative: DeVile, Jonathan Mark

(57) **Abstract**

A method for distributing geographically and socioenconomically targeted media, advertising, and electronic coupons via non-telephony wireless methods to portable consumer electronic and communication devices, based upon the cross-registration meta data of the manufacturer product warranty information to a local digital signage network. The method includes detecting that the CE device is nearby a provision unit; accessing a database using an identification of the CE device; obtaining from the database user information correlated to the identification of the CE device; using the user information to identify at least one sales offer to be made; and wirelessly transmitting the sales offer to the CE device without using a telephony system.

## Description

### I. FIELD OF THE INVENTION

The present invention relates generally to the provision of wireless sales offers to consumer electronics (CE) devices using non-telephony wireless transmission.

### II. BACKGROUND OF THE INVENTION

Signs are provided in retail outlets that advertise goods to be vended. As understood herein, a sign can be digital, i.e., driven by a processor, so that the advertising displayed on the sign can be easily changed. As also understood herein, sales offers, including advertising, are more effective when targeted to consumers with an understanding of the recipients' demographics, socio-economic status, etc.

### SUMMARY OF THE INVENTION

Various aspects and features of the present invention are defined in the appended claims.

In one embodiment a method for providing a sales offer to a user of a consumer electronics (CE) device includes detecting that the CE device is nearby a provision unit such as a digitally enabled sign, and accessing a database using an identification of the CE device. The method also includes obtaining from the database user information correlated to the identification of the CE device and using the user information to identify at least one sales offer to be made. The method includes wirelessly transmitting the sales offer to the CE device without using a telephony system. The sign may undertake the act of detecting.

In some embodiments the user information can include demographic information and/or geographic information that does not personally identify the user. The sales offer may include an advertisement and may be transmitted from the sign to the CE device using Wi-Fi or Bluetooth or ultra wide band (UWB) communication or other wireless non-telephony means. In any case, a user of the CE device need only power on the device and take no further action to receive the sales offer from the provision unit once the CE device is detected near the provision unit.

In another aspect, a digitally-enabled sign includes a housing holding a processor and a non-telephony wireless transceiver communicating with the processor. The processor receives a signal indicating that a CE device is nearby. The signal includes a CE device ID, and the processor sends the device ID to a sales offer server with a sales offer being identified in response thereto for provision of the sales offer to the CE device through the non-telephony wireless transceiver.

In another aspect, a system includes means for detecting the presence of a CE device having a device ID, and means for sending the device ID to a sales offer means correlating the device ID to at least one sales offer. Non-telephony wireless transmission means are provided and are associated with the means for detecting for transmitting the sales offer to a CE device.

### BRIEF DESCRIPTION OF THE DRAWINGS

Embodiments of the present invention, both as to its structure and operation, can best be understood in reference to the accompanying drawings, in which like reference numerals refer to like parts, and in which:
Figure 1 is a block diagram of an example system in accordance with present principles;
Figure 2 is a flow chart showing the logic of obtaining user information; and
Figure 3 is a flow chart showing the logic of providing sales offers from a digitally-enabled sign to a CE device.

### DETAILED DESCRIPTION OF THE PREFERRED EMBODIMENT

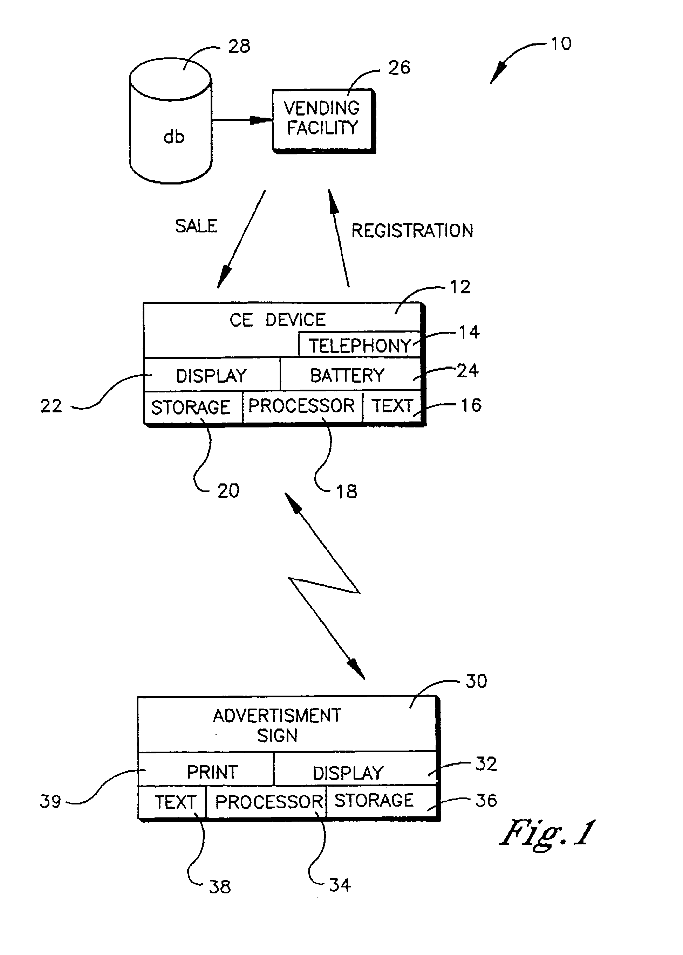

Referring initially to Figure 1, a system is shown, generally designated 10, which includes one or more consumer electronic (CE) devices 12 (only a single CE device 12 shown for clarity). The CE device 12 may be, without limitation, a wireless telephone-enabled device, in which case it includes a wireless telephony transceiver 14 such as but not limited to a GSM or CDMA transceiver. Or, the CE device 12 may be, e.g., a laptop computer or a personal digital assistant or a digital camera or other device that is not enabled for wireless telephony. In any case, the CE device 12 includes a non-telephony wireless transceiver 16 that can be controlled by a CE device processor 18 which may access a tangible data storage medium 20 such as but not limited to disk storage or solid state storage. The non-telephony wireless transceiver 16 can be a Bluetooth transceiver, ultra wide band (UWB) transceiver, Wi-Fi transceiver, or other broadband wireless non-telephony transceiver. The processor 18 may control a visual display 22 and the components of the CE device 12 may be contained in a single portable housing and powered by one or more rechargeable batteries 24.

The CE device may be purchased from an online or physical vending facility 26, and typically as part of the purchase process (or immediately following it), the purchaser submits warranty information back to the vending facility (or associated entity) that includes demographic information (e.g., one or more of age, sex, income), geographic information (e.g., city of residence) associated with the user, and user-identified personal preferences. Information personally identifying the user, such as the user's name or social security number, may also be provided but as disclosed further below is preferably not used to provide targeted information. The information may be stored in a database 28.

Subsequent to purchase, the purchaser (also referred to as "user") of the CE device 12 may enter a facility including the vending facility 26 or other location with the CE device 12 in hand. The user may pass nearby a sales offer provisioning unit. In one implementation, the sales offer provisioning unit may be a digitally enabled sign 30 that may also be regarded as a kiosk.

The sign 30 typically includes a display 32 such as a flat panel display on which information such as advertisements can be displayed. The display 32 is controlled by a sign processor 34 which accesses a computer storage 38 that may be implemented as disk-based memory or solid state memory. The processor 34 also controls a non-telephony wireless transceiver 38 that can communicate with the non-telephony wireless transceiver 16 of the CE device 12. The sign may also include a printer 39 that is controlled by the sign processor 34, and the above components of the sign 30 may be located in a single sign housing and may be battery-powered or powered off the AC grid.

The logic discussed below may be stored on, e.g., the storages 20, 36 for execution by the respective processors 18, 34. Accordingly, the present invention may be manifested by implementation of tangible computer readable media such as the media described above.

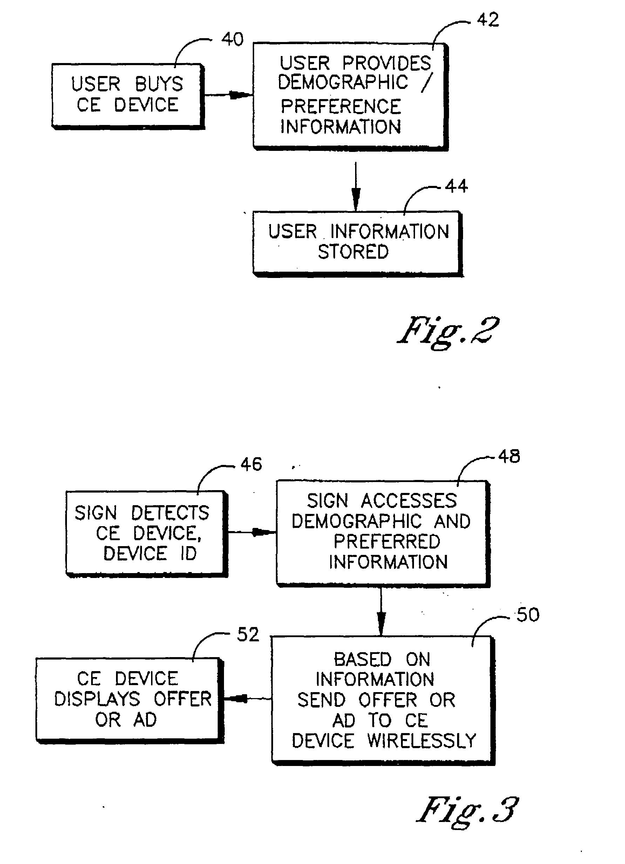

Now referring to Figure 2, as mentioned above and as indicated at block 40, the user purchases the CE device 12. Moving to block 42, the user provides the above-discussed user-related information, typically as part of the device registration process. This information is stored at, e.g., the database 28 as indicated by block 44.

Subsequently, as shown in Figure 3, block 46, when the user enters the proximity of the digitally enabled advertising sign 30 with the CE device 12 in hand, the sign 30 detects the device 12. This may be undertaken by, e.g., detecting a network search signal from the non-telephony wireless transceiver 16. The search signal may be received by the non-telephony wireless transceiver 38 of the sign 30 and processed by the sign processor 34 to determine that the CE device 12 is near. Typically, the search signal or attendant messages precipitated by successfully discovering a wireless network contain the identification of the CE device 12, so that the sign processor 34 can receive the device ID. Other detection methods are contemplated herein.

Moving to block 48, the sign 30 communicates, e.g., over the Internet, with the database 28 using the device ID as entering argument. The device ID is correlated to the information associated with the person who purchased the device 12. Regardless of whether personally identifiable information is in the database 28, it is preferred that only non-personally identifiable consumer demographic and preference information about the person who registered the CE device 12 be used.

At block 50, based upon the user's demographic and/or geographic and/or preference information, the sign processor 34 may access a database associated with the sign 30, such as but not limited to the sign storage 36, to correlate one or more product offers in the sign storage 36 to the CE device 12. For instance, knowing that the purchaser of the CE device 12 is a middle-aged male, the processor 34 may determine that an offer or advertisement to purchase new golf clubs should be presented on the sign display 32 and/or CE device display 22, and this can be immediately executed at block 52, before the user leaves the vicinity of the sign 30. That is, the message presented on the sign display 32 can change according to the device ID of the CE device 12 that is nearby the sign 30, and/or the sales offer can be sent to the CE device 12 via the non-telephony wireless transceivers 16, 38 for display of the sales offer on the display 22 of the CE device 12. Or, a sales offer in the form of a coupon can be printed on the sign printer 39, for retrieval thereof by the user of the CE device 12, or the coupon can be wirelessly sent to the CE device 12 as a form of sales offer. In any case, the logic of Figure 3 preferably occurs automatically and transparently to the user without requiring any user action to receive notice of the offer other than to have the CE device powered on.

If desired, the user can be given the choice to accept the offer by means of a prompt from the sign 30. The user can accept the offer, which is then presented on the device 12 and/or stored in the device storage 20 for use at a future retail transaction. The data storages, signs, and transmission media can all be owned by different entities if desired.

While the particular PROVISION OF WIRELESS OFFERS TO CE DEVICE USING NON-TELEPHONY WIRELESS TRANSMISSION is herein shown and described in detail, it is to be understood that the subject matter which is encompassed by the present invention is limited only by the claims. For example, the database 28 may itself correlate the device ID to user demographics and then return an appropriate sales offer over the Internet to the sign 30 for display thereof. Furthermore combinations of features and method steps defined in the claims are included within the scope of the present invention other than those specified by the specific dependency of the claims.

## Claims

1. A method for providing a sales offer to a user of a consumer electronics (CE) device, comprising:
detecting that the CE device is nearby a provision unit;
accessing a database using an identification of the CE device;
obtaining from the database user information correlated to the identification of the CE device;
using the user information to identify at least one sales offer to be made; and
wirelessly transmitting the sales offer to the CE device without using a telephony system.

2. The method of Claim 1, wherein the provision unit is a digitally-enabled sign, and the sign undertakes the act of detecting.

3. The method of Claim 1, wherein the user information includes demographic information and/or geographic information and does not personally identify the user.

4. The method of Claim 1, wherein the sales offer includes an advertisement.

5. The method of Claim 2, wherein the sales offer is transmitted from the sign to the CE device using Wi-Fi.

6. The method of Claim 2, wherein the sales offer is transmitted from the sign to the CE device using Bluetooth.

7. The method of Claim 2, wherein the sales offer is transmitted from the sign to the CE device using ultra wide band (UWB) communication.

8. The method of Claim 1, wherein a user of the CE device need only power on the device and take no further action to receive the sales offer from the provision unit once the CE device is detected near the provision unit.

9. A digitally-enabled sign, comprising:
a housing;
a processor in the housing; and
a non-telephony wireless transceiver in the housing communicating with the processor, wherein
the processor receives a signal indicating that a CE device is nearby, the signal including a CE device ID, the processor accessing a sales offer server, a sales offer being identified in response to the device ID for provision of the sales offer to the CE device through the non-telephony wireless transceiver.

10. The sign of Claim 9, wherein the device ID is correlated to user information including demographic information and/or geographic information not personally identifying the user.

11. The sign of Claim 9, wherein the sales offer includes an advertisement.

12. The sign of Claim 9, wherein the sales offer is transmitted from the sign to the CE device using Wi-Fi.

13. The sign of Claim 9, wherein the sales offer is transmitted from the sign to the CE device using Bluetooth.

14. The sign of Claim 9, wherein the sales offer is transmitted from the sign to the CE device using ultra wide band (UWB) communication.

15. The sign of Claim 9, wherein a user of the CE device need only power on the device and take no further action to receive the sales offer from the sign once the CE device is detected near the sign.

16. A system, comprising:
means for detecting the presence of a CE device having a device ID;
means for sending the device ID to a sales offer means correlating the device ID to at least one sales offer; and
non-telephony wireless transmission means, associated with the means for detecting, for transmitting the sales offer to a CE device.

17. The system of Claim 16, wherein the sales offer is transmitted from the wireless transmission means to the CE device using Wi-Fi.

18. The system of Claim 16, wherein the sales offer is transmitted from the wireless transmission means to the CE device using Bluetooth.

19. The system of Claim 16, wherein the sales offer is transmitted from the wireless transmission means to the CE device using ultra wide band (UWB) communication.

20. The system of Claim 16, wherein the device ID is correlated to user information including demographic information and/or geographic information not personally identifying the user.
